(19) Europäisches Patentamt
European Patent Office
Office européen des brevets

(11) Publication number: **0 042 937**
**B1**

# (12) EUROPEAN PATENT SPECIFICATION

(45) Date of publication of patent specification: **10.10.84**

(51) Int. Cl.$^3$: **C 09 K 5/00**

(21) Application number: **81103375.2**

(22) Date of filing: **05.05.81**

## (54) Antifreeze concentrate containing inhibitors to prevent localized corrosion of aluminum and solder alloy.

(30) Priority: **19.05.80 US 151069**

(43) Date of publication of application:
**06.01.82 Bulletin 82/01**

(45) Publication of the grant of the patent:
**10.10.84 Bulletin 84/41**

(84) Designated Contracting States:
**BE DE FR GB NL SE**

(56) References cited:
**GB-A- 945 638**
**GB-A-2 059 432**
**US-A-4 085 063**

(73) Proprietor: **BASF WYANDOTTE CORPORATION**
**1609 Biddle Avenue**
**Wyandotte Michigan 48192 (US)**

(72) Inventor: **Hirozawa, Stanley Tariho**
**174 Bassett Place**
**Birmingham Michigan 48010 (US)**

(74) Representative: **Michaelis, Wolfgang, Dr. et al**
**c/o BASF Aktiengesellschaft 38 Carl-Bosch-Strasse**
**D-6700 Ludwigshafen (DE)**

**EP 0 042 937 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to localized corrosion inhibited antifreeze concentrates in coolant compositions in contact with metals comprising aluminium and solder alloys.

The use of aluminium and aluminium alloys in automobile engines has recently become of interest as a result of greater emphasis on weight reduction. The presently used corrosion inhibited antifreeze coolant compositions for water-cooled, internal combustion engines are not satisfactory for use with aluminium radiators or heater cores mainly because of the tendency of aluminium to exhibit localized corrosion as evidenced by pitting and crevice corrosion in contact with aqueous liquids utilized as coolants. There is a need for an antifreeze concentrate having a balanced blend of corrosion inhibitors allowing use with either aluminium or soldered brass radiators and heater cores.

In US—A—2,153,952, a method of preventing localized corrosion of aluminium in contact with antifreeze coolants is disclosed. An alkali metal nitrate inhibitor in an amount of about 0.01 percent to 1.0 percent by weight of the alcohol-based coolant is utilized.

In. US—A—4,085,063, a method and composition for inhibiting pitting and corrosion of a water-cooled system containing aluminium water-cooled members is disclosed. As a pitting and general corrosion inhibitor, a mixture of a water-soluble nitrate and a water-soluble metasilicate is disclosed as a synergistic combination of corrosion inhibitors effective in preventing pitting and general corrosion of aluminium exposed to aqueous environments containing chloride ion. Where these inhibitors are used singly, pitting corrosion of the aluminium occurs rapidly.

In US—A—3,630,752, there is disclosed that the addition of nitrate ions to a liquid solution of ammoniated superphosphoric acid is effective in preventing ferrous and aluminium metal corrosion where these metals are in contact with an aqueous solution of said acid.

In US—A—3,414,519, there is disclosed a corrosion inhibitor for use in an internal combustion engine. A combination of corrosion inhibitors is disclosed including a borate of an alkali or an alkaline earth metal, a nitrite of an alkali or an alkaline earth metal, benzotriazole and a polar-type oil inhibitor.

In GB—A—945 638 antifreeze compositions are disclosed which prevent general corrosion and which contain sodium nitrate, sodium nitrite, sodium silicate, sodium benzoate and benzotriazole. These compositions are not entirely satisfactory in their prevention of aluminium alloy corrosion.

In the U.R. Evans Conference on Localized Corrosion held in 1971 and reported in a volume edited by Staehle et al published in 1974 by the National Association of Corrosion Engineers, pages 580 to 599, at pages 580 to 582, Galvele et al, in an article entitled "Critical Potentials for Localized Corrosion of Aluminium Alloys" disclose the electrochemically-determined pitting potentials of aluminium in various electrolytes including sodium nitrate and mixtures of sodium chloride and sodium nitrate. Thus, the pitting potential of aluminium in sodium nitrate is disclosed as about 1.6 volts and the pitting potential of a mixture of sodium nitrate and sodium chloride (0.8 molar sodium nitrate and 0.2 molar sodium chloride) is also 1.6 volts.

It has been estimated that over 90 percent of the corrosive failure of aluminium and its alloys in contact with aqueous liquids occurs because of localized corrosion. Localized corrosion is defined as corrosive attack which is manifested by pitting attack on the metal and corrosion which can occur in occluded areas such as in areas where the metal surfaces overlap. This is otherwise known as "crevice" corrosion. The corrosive tendency of aluminium in contact with aqueous liquids can be determined by electrochemical methods wherein the critical pitting potential is determined by either current controlled methods (Galvanodynamic or voltage controlled methods (Potentiodynamic). The mechanism of pit initiation is a matter of controversy for aluminium as well as for other metals. Even though a generally accepted theory is lacking, one theory is that pits initiate above a critical pitting potential. While not intending to be bound by theory, it is believed that the cause of pitting of aluminium and its alloys is the presence of local galvanic cells consisting of cathodic impurity sites surrounded by the anodic aluminium matrix.

It is common practice to dilute antifreeze concentrate compositions utilizing tap water which can contain generally up to about 200 parts per million of alkali or alkaline earth metal halide, mainly alkali metal chloride, as a contaminant. Usually, the tap water contains about 5 to about 200 parts, and most likely about 5 to about 100 parts by weight per million, all based upon the total weight of the water. Such coolant compositions are used as a heat-transfer medium in water-cooled, internal combustion engines. Because the halide ion is effective in promoting pitting and crevice corrosion of aluminium and its alloys at extremely low concentrations, such coolant compositions must be constituted so as to provide localized corrosion inhibition of metals with which the coolant compositions come in contact. The coolant compositions known heretofore fail to provide a balanced inhibitor mixture which provides protection against localized corrosion of aluminium alloys as well as general corrosion protection of solder alloys.

The object of the invention is to provide a simple, low-cost antifreeze concentrate for mixing with water to form a composition capable of preventing localized corrosion of aluminium and its alloys upon exposure of the metal surface to the antifreeze containing alkali metal halide while also providing general corrosion inhibition of other metals, especially solder alloys, in contact with aqueous liquids. More specifically, an object of the invention is to provide a balanced aqueous antifreeze concentrate for

use for a coolant composition containing alkali metal halides which is non-corrosive both to aluminium and solder alloys. Aqueous antifreeze concentrates and antifreeze compositions are disclosed which are suitable for use in contact with aluminium alloys and solder alloys such as ASTM 2001, 2002, 2003, 2004, 2005, and 2006.

This object was achieved with a corrosion inhibiting antifreeze concentrate having a pH of 6 to 11, said concentrate comprising water, up to 200 parts per million of water-soluble metal halide, a water-soluble alcohol, 0.4 percent to 2.0 percent by weight of a water-soluble nitrate, and 0.1 percent to 2.0 percent by weight of water-soluble phosphates, water-soluble molybdates, water-soluble triazoles, water-soluble thiazoles or water-soluble thiadiazoles as solder alloy corrosion inhibitor, and 0.1 to 1% by weight of a general corrosion inhibitor consisting of the polymers of silylalkyl esters of phosphorus and a water-soluble silicate, all based upon the total weight of said antifreeze concentrate.

A localized corrosion inhibiting amount of a water-soluble nitrate is used to achieve the desired resistance to pitting and crevice corrosion of the aluminium. This is generally independent of the specific aluminium alloy to be protected, but is dependent upon pH, the specific alkali metal halide present and its concentration, the presence of other general metal corrosion inhibitors and their concentration, and the temperature of the liquid solution to which the metal is exposed. An increased pitting corrosion tendency results at high halide ion concentrations and at elevated temperatures. The presence of other general corrosion inhibitors can reduce or increase the proportion of water-soluble nitrate required for corrosion protection of aluminium alloys. Because water-soluble nitrates are generally considered active general corrosion promoters for solder alloys, the use of more than the minimum amount of nitrate ion needed to protect the aluminium is undesirable where the antifreeze is designed to protect solder alloys as well as aluminium or aluminium alloys in contact with aqueous antifreeze compositions. At halide ion concentrations, calculated as sodium halide, up to 200 parts per million, generally 0.4 percent to 2.0 percent, preferably 0.5 percent to 1.5 percent, most preferably 0.6 percent to 1.0 percent all by weight of a water-soluble nitrate is required to protect aluminium and its alloys from pitting and crevice corrosion.

The water-soluble nitrate ion can be derived from any inorganic nitrate compound which is capable of ionization to provide nitrate ions in sufficient concentration to passivate an aluminium or aluminium alloy surface. For instance, the water-soluble nitrate can be derived from nitric acid, ammonium nitrate or an alkali metal or alkaline earth metal nitrate. Preferably, the water-soluble nitrate is an alkali metal nitrate. It is possible to add nitric acid to the aqueous liquid and subsequently add an alkali or alkaline earth metal hydroxide to neutralize the nitric acid and obtain an aqueous solution having a pH in the desired alkaline pH range. Useful water-soluble nitrate salts are sodium nitrate, potassium nitrate, lithium nitrate, cesium nitrate, rubidium nitrate, calcium nitrate, strontium nitrate, magnesium nitrate, beryllium nitrate, zinc nitrate, and cadmium nitrate.

Inhibitors of solder corrosion found effective alone or in combination with a water-soluble nitrate are the water-soluble phosphates, triazoles, thiazoles, thiadiazoles, and simple, isopoly- and heteropolymolybdates. Representative useful water-soluble phosphates include the orthophosphates, metaphosphates, and pyrophosphates. The ammonium and alkali metal salts such as the sodium, potassium, lithium, rubidium, and cesium salts are particularly useful. Polyphosphates can also be used since, in an aqueous medium, these will hydrolyze to yield orthophosphates. Representative useful thiazoles include the alkali metal salts such as the sodium, potassium, lithium, rubidium, and cesium salts of thiazoles such as mercaptobenzothiazole, mercaptothiazole, 4-phenyl-2-mercaptobenzothiazole, 4-methyl-2-mercaptobenzothiazole, and 5-methyl-2-mercaptobenzothiazole. Representative useful triazoles include benzotriazole, tolyltriazole, benzotriazole carboxylic acid; alkyl esters of benzotriazole carboxylic acid having 1 to 8 carbon atoms in the alkyl group such as the methyl and butyl esters thereof; and benzotriazole derivatives having various substituents on the aromatic ring, i.e., $NO_2$, Cl, and $NH_2$. Representative useful thiadiazoles include ammonium and alkali metal salts of thiadiazoles such as dimercaptothiadiazole, for instance, sodium and potassium dimercaptothiadiazole. Representative useful molybdates include ammonium or alkali metal salts of molybdates, isopolymolybdates and heteropolymolybdates such as sodium and potassium molybdates as well as the phosphomolybdates such as phospho-12 molybdate and the 2-phospho-18-molybdate, and the silicomolybdates such as silico-12-molybdate. Other examples of useful solder corrosion inhibitors under these classes of compounds are disclosed in *Advanced Inorganic Chemistry,* 3rd Edition, Cotton et al, Interscience, 1972. Alone or in admixture with an effective aluminium localized corrosion inhibiting amount of a water-soluble nitrate, generally 0.1 to 2.0 percent, preferably 0.5 to 1.5 percent, and most preferably 0.5 to 1 percent, all by weight and based upon the weight of the antifreeze concentrate, of said solder alloy corrosion inhibitors are used.

A wide range of general corrosion inhibitors for metals below sodium in the electromotive displacement series can be utilized in the antifreeze concentrate together with a water-soluble nitrate compound and/or a solder alloy corrosion inhibitor. Such general corrosion inhibitors include both organic materials and inorganic materials. Illustrative of the water-soluble or dispersible organic materials that have been used as inhibitors in aqueous heat transfer compositions are: guanidine, citrates, silicones, coal tar derivatives, thiocyanates, peptones, phenols, thioureas, quinoline, morpholine, triethanolamine, tartrates, glycol monoricinolate, organic nitrites, mercaptans, organic oils

sulfonated hydrocarbons, fatty oils, water-soluble triazoles such as tolyltriazole, dimercaptothiadiazole, and mercaptobenzothiazole. Illustrative of the water-soluble inorganic materials that have been used as inhibitors are: sulfates, sulfides, fluorides, hydrogen peroxide, chromates, nitrites, phosphates, borates, tungstates, molybdates, silicates, and water-soluble borates. The general corrosion inhibitors are used generally in the amount of 0.5 percent to 5 percent, preferably 1 percent to 3 percent by weight based upon the weight of the antifreeze concentrate.

Where other corrosion inhibitors are present, more or less of the nitrate ion may be necessary to achieve localized corrosion inhibition of the aluminium depending upon the particular species or mixture of general corrosion inhibitors present. Where both localized corrosion of aluminium and its alloys and general corrosion of solder alloys of lead and tin are to be inhibited, the disclosed inhibitors for solder alloys must be included in the heat-transfer medium since the nitrate ion is an aggressive corrodant for solder alloys when used in concentrations required to protect aluminium and its alloys from localized corrosion. Known general corrosion inhibitors which are particularly useful in combination with the nitrate ion and solder alloy corrosion inhibitors are the alkali metal nitrates, such as sodium nitrate; the triazoles such as tolyltriazole and benzotriazole; and the mercaptobenzothiazoles such as the alkali metal mercaptobenzothiazoles, for instance sodium mercaptobenzothiazole.

The aqueous antifreeze concentrates for use to form coolants in the cooling systems of internal combustion engines generally utilize a water-soluble alcohol which is defined to include both monohydric alcohols (such as methanol, ethanol, and propanol) and polyhydric alcohols (such as ethylene glycol, propylene glycol, diethylene glycol, triethylene glycol, and glycerol). The alcohol can also include hydrocarbon alcohols and alcohols containing ether linkages. Mixtures of alcohols are also useful in the compositions of this invention. In view of its desirable physical properties such as its low molecular weight and its low volatility, ethylene glycol is an especially useful alcohol in these compositions.

The use of concentrates of this invention to form coolant compositions include antifreeze coolants composed mainly of water, whereas the antifreeze concentrates themselves contain relatively small amounts of water and consist mainly of at least one water-soluble alcohol and corrosion inhibitors. The antifreeze concentrates are adapted for economical shipment and storage, which are finally used as antifreeze coolants which are adapted as heat-transfer media in the cooling systems of water-cooled internal combustion engines. In practice, the antifreeze concentrates can be shipped to the point of use whereupon they can be diluted with water to form the coolant composition.

The antifreeze coolant compositions can contain from 100 parts by weight to 800 parts by weight of water containing up to 200 parts per million of a water-soluble metal halide, particularly sodium chloride, per 100 parts by weight of a water-soluble alcohol. Preferably, the coolant compositions contain from 100 to 300 parts by weight of water per 100 parts by weight of the water-soluble alcohol. The relative amount of water and alcohol in the antifreeze coolant compositions can be varied to raise or lower the freezing point of the compositions in the desired amount. The antifreeze concentrates of the invention can contain from 0.1 part to 10 parts by weight of water per 100 parts by weight of water-soluble alcohol, preferably the antifreeze concentrates contain 2 parts to 5 parts by weight of water per 100 parts by weight of the water-soluble alcohol.

If desired, various additives can be added to the antifreeze concentrates, in particular, antifoam agents, identifying dyes, pH indicators, conventional corrosion inhibitors, sealants which prevent leakage of the coolant from the cooling system, anticreep agents which prevent seepage of the coolant into the crankcase of the internal combustion engine, and the like can be added to the heat-transfer compositions. The aluminium and/or solder corrosion inhibited heat transfer compositions can be formed in any convenient manner by adding a water-soluble nitrate and/or a solder corrosion inhibitor to water optionally containing a water-soluble alcohol, prior art general corrosion inhibitors, pH buffers and various additives for imparting special properties to the heat-transfer medium.

The corrosion inhibited heat transfer compositions can include buffer compositions which serve to maintain the pH within the range of 6 to 11 and preferably 7 to 10.5 and most preferably 8 to 10.5 in order to minimize the rate of local and general metal corrosion which increases sharply with decreasing pH below pH 2 and at pH above 11. Suitable buffers are salts derived from strong acids and weak bases, such as triethanolamine, and triethylenediamine; weak acids and strong bases such as the hydroxides of the alkali metals (sodium, potassium, and lithium) which are especially useful although salts derived from weak acids and weak bases (i.e., ammonium hydroxide) can also be used. Salts derived from strong bases and acids such as boric, molybdic, phosphotungstic, phosphomolybdic, phosphoric, carbonic, tungstic, and arsenic acid are useful basic buffers. Such acids generally have $pK_a$ values of at least 7 to 11. Illustrative of useful buffers are sodium and potassium carbonate, ammonium nitrate, triethylene diamonium nitrate, triethanol ammonium nitrate, sodium phosphate, sodium molybdate, sodium phosphomolybdate, sodium phosphotungstate, sodium metaarsenite, lithium molybdate, lithium borate, ammonium monohydrogen phosphate, and sodium tungstate. The preferred buffers are the sodium borates and potassium borates, for instance, sodium metaborate and tetraborate, and potassium metaborate and tetraborate. Mixtures of buffers are also useful in the compositions.

A particularly effective class of corrosion inhibitor of the prior art is one in which a silicone is utilized in admixture with a water-soluble metal silicate, particularly an alkali metal silicate as disclosed in US—A—3,341,469; 3,337,496; 3,312,622; 3,198,820; 3,203,969; 3,248,329; 3,265,623; 3,121,692; 3,121,692. It has been found that compositions containing water-soluble metal silicates are effective general corrosion inhibitors for metals in internal combustion engines, especially aluminium engines. The use of said metal silicates alone in antifreeze compositions is disadvantageous since these compositions have poor shelf life and/or use life, that is, they exhibit a tendency to gel and form precipitates on standing prior to dilution of antifreeze concentrates by the consumer or during use as a coolant. The water-soluble organo-silicones, which have been suggested by the prior art for use in admixture with said metal silicates in antifreeze compositions, tend to overcome the tendency to gel and form precipitates of the metal silicates when used without the organo-silicone component.

Concentrations of up to 200 parts, preferably 5 to 200 parts per million, of alkali metal halide in the aqueous heat-transfer meadie are ineffective in promoting localized corrosion of aluminium and its alloys when the water-soluble nitrate is present at a concentration within the range specified herein. The corrosive effect of antifreeze coolants containing water-soluble halides, particularly aqueous solutions of alkali metal halides, especially the localized corrosive effect thereof, is most serious with alkali metal chlorides but extends to other metal halides. Representative corrosive alkali metal halide salts are the chloride, bromide, and iodide salts of sodium, potassium, lithium, rubidium, and cesium, for instance, sodium chloride, sodium bromide, sodium iodide, potassium chloride, potassium bromide, potassium iodide, lithium, chloride, lithium bromide, lithium iodide, rubidium rubidium iodide, cesium chloride, cesium bromide, and cesium iodide. Alkaline earth metal halides also exert corrosive effects on aluminium and aluminium alloys. Thus calcium chloride, calcium bromide, and calcium iodide represent corrosive water-soluble, alkaline earth metal halides.

A general corrosion inhibitor for iron and aluminium, to be present in the concentrates of the invention is a polymer of a silylalkyl ester of phosphorus and a water-soluble silicate. The silylalkyl esters of phosphorus are known compounds and processes for their preparation are disclosed in US—A—4,093,641. They can be prepared by the addition of $(C_2H_3O)_3SiH$ to unsaturated phosphites but are preferably prepared by reacting silanes of the general formula:

$$R_3SiR'X, \qquad \text{I}$$

or siloxanes of the general formula:

$$(CH_3)_3SiO[(CH_3)_2SiO]_n(XR'CH_3SiO)_mSi(CH_3)_3, \qquad \text{II}$$

or oligomers of the general formula:

$$[XR'(CH_3)_2Si]_2—O[(CH_3)_2SiO]_n \qquad \text{III}$$

with phosphorus compounds having the general formula:

$$CH_3O\overset{\overset{\displaystyle O}{\|}}{P}—R''_2$$

wherein R is an alkyl group, aryl group, alkoxy group containing 1 to 4 carbon atoms, an R'X group or a siloxy group; X is chlorine, bromine, or iodine, m is a positive integer; n is 0 or a positive integer; R' is a divalent alkyl or aralkyl radical; and R" is methyl, ethyl, phenyl, halobenzyl, or —OR''' wherein R''' is methyl or phenyl.

The water-soluble silicates can be represented by the average formula:

$$(M_{\frac{2}{a}}O)(SiO_2)_n$$

wherein n has a value from 0.5 to 4, or preferably from 1.0 to 2.5 and wherein M is a cation that forms a water-soluble silicate and a is the valence of the cation represented by M and has a value of at least 1. Illustrative of these silicates are the alkali metal orthosilicates wherein M is an alkali metal and n is 1, the alkali metal metasilicates, the alkali metal tetrasilicates, the alkali metal disilicates, and the tetra(organo) ammonium silicates. Specific examples of these silicates are potassium metasilicate, sodium orthosilicate, potassium disilicate, lithium orthosilicate, lithium metasilicate, lithium disilicate, rubidium disilicate, rubidium tetrasilicate, tetra(methyl) ammonium silicate, tetra(ethyl) ammonium silicate, phenyltrimethyl ammonium silicate, benzyltrimethyl ammonium silicate, guanidine silicate, and tetra(hydroxy-ethyl)ammonium silicate. The preferred silicates are sodium and potassium silicates, especially sodium disilicate and potassium disilicate.

The proportions of silicone to silicate residues in the polymer are generally 1 to 99 preferablv

about 1 to about 30 parts by weight of silicone to 1 to 99 preferably about 99 to about 70 parts by weight of water-soluble silicate. The polymer can be formed *in situ* by adding the components to an aqueous antifreeze concentrate having a pH of 8 to 10.5. A corrosion inhibiting amount is used, that is, a general corrosion inhibiting amount of 0.1 to 1, preferably 0.1 to 0.6 percent by weight all based upon the weight of said concentrate.

A group of general corrosion inhibitors particularly useful in the antifreeze concentrates in addition to the other components, are the tertiary, bicyclic, or tricyclic amines. These corrosion inhibitors when utilized under basic or alkaline conditions are useful to inhibit the general corrosion of metals below sodium in the electromotive displacement series and are especially useful in inhibiting the general corrosion of iron, steel and aluminium. A representative useful tertiary bicyclic amine is 1,4-diazabicyclo-(2.2.2)-octane, commonly known as triethylene diamine.

The invention is generally applicable to all systems wherein either aluminium or an aluminium alloy or solder alloys comprising lead and tin are in contact with an aqueous antifreeze or coolant composition including generally all temperature ranges encountered therein. Thus, useful temperatures range from the freezing point of the aqueous solution to about 90°C (195°F) or higher where sufficient pressures are maintained to keep the solution in the liquid phase and to maintain the desired nitrate ion concentration. Pressures can vary from subatmospheric to 700 bar (10,000 pounds per square inch gauge) or more.

Test methods

In the prior art many electrochemical techniques have been used to investigate resistance to localized corrosion and passivity of various metals and their alloys. Constant potential tests have gained some acceptance by those skilled in the art as being capable of predicting the corrosion resistance under field conditions. For the purposes of evaluating pitting and crevice corrosion tendencies of the antifreeze coolant compositions of the invention a potentiostat was utilized which was capable of applying a controlled constant potential on the aluminium alloy specimen in a test cell relative to a standard reference electrode such as a saturated Calomel electrode. The test aluminium electrode coupon was stamped from type 3003 aluminium alloy, cleaned utilizing a solvent, i.e., a mixture of toluene and acetone, air dried at ambient temperature and then immersed in an antifreeze coolant composition of the invention prepared by diluting an antifreeze concentrate of the invention to 25 percent by weight with water containing 100 parts per million of sodium chloride. The temperature of the test cell was controlled at 25° centigrade and the contents were continuously stirred during the 72 hour test.

The test procedure utilized to evaluate the resistance to solder corrosion is a 14-day test in which an antifreeze concentrate is diluted to 50 percent and thereafter continuously pumped through an electrochemical test cell containing solder specimens. In the test, the coolant enters through an impingement tube and is directed against an impingement brass coupon which forms the anode of the electrochemical cell, the potential of which is maintained at 1.5 volts. After completion of the test procedure the specimens are visually examined for solder bloom. The solder specimens are also graded according to weight loss.

The following illustrates the various aspects of the invention. Where not otherwise specified throughout this specification and claims, temperatures are given in degrees centigrade and parts, percentages and proportions are by weight.

Comparative Example 1

The antifreeze concentrate of Example 1 but without sodium nitrate is evaluated for localized corrosion in accordance with the test procedures outlined above. After 72 hours, at a constant potential of —100 millivolts with the antifreeze concentrate diluted to 25 percent by weight with water containing 100 parts per million of sodium chloride, the aluminium alloy specimens show pitting.

TABLE
Antifreeze concentrate (parts by weight)

| Ingredients | Example 1 |
|---|---|
| Ethylene glycol | 89.17 |
| Diethylene glycol | 4.69 |
| Water | 2.5 |
| $(Na_2B_4O_7) \cdot 5H_2O$ | 0.5 |
| $Na_2HPO_4$ (anhydrous) | 1 |
| $(Na_2SiO_3) \cdot 5H_2O$ | 0.4 |
| Silicone, silylalkyl ester of phosphorus | 0.04 |
| $NaNO_2$ | 0.3 |
| $NaNO_3$ | 0.2 |
| Na mercaptobenzothiazole | 0.25 |
| Tolyltriazole | 0.1 |

Example 1

To the antifreeze concentrate of Comparative Example 1, there is added one percent by weight sodium nitrate. The concentrate is diluted to 25 percent by weight with water containing 100 parts per million of sodium chloride and again evaluated at a constant potential of —100 millivolts for 72 hours to determine the resistance to localized corrosion. The sample is found to be free of localized corrosion. When example 1 is evaluated for ASTM 2001—2006 solder corrosion, it is found that the samples possess sufficient resistance to solder corrosion.

## Claims

1. A corrosion inhibiting antifreeze concentrate having a pH of 6 to 11, comprising water, up to 200 parts per million of water-soluble metal halide, a water soluble alcohol, 0.4 percent to 2.0 percent by weight of a water-soluble nitrate, and 0.1 percent to 2.0 percent by weight of water-soluble phosphates, water-soluble molybdates, water-soluble triazoles, water-soluble thiazoles, or water-soluble thiadiazoles, as solder alloy corrosion inhibitor, and 0.1 to 1% by weight of a general corrosion inhibitor consisting of the polymers of silylalkyl esters of phosphorus and a water-soluble silicate, all based upon the total weight of said antifreeze concentrate.

2. The concentrate of claim 1, wherein the water-soluble alcohol is a polyhydric alcohol and the solder alloy corrosion inhibitor an alkali metal phosphate or molybdate, mercaptobenzothiazole, dimercaptothiadiazole, phosphomolybdate or silicomolybdate, and mixtures thereof.

3. The concentrate of claim 1 wherein the pH is 7 to 10.5, the alcohol is ethylene glycol, propylene glycol or diethylene glycol, and mixtures thereof, and the water-soluble halide is an alkali metal chloride, bromide or iodide and mixtures thereof.

4. The composition of claim 1 wherein the antifreeze concentrate comprises in percent by weight:

| | |
|---|---|
| ethylene glycol | 80 to 95 percent; |
| diethylene glycol | 2 to 8 percent; |
| water | 1 to 5 percent; |
| disodium silicate | 0.01 to 1.0 percent; |
| a silylalkyl ester of phosphorus | 0.01 to 1.0 percent; |
| disodium phosphate | 0.5 to 2.5 percent; |
| sodium nitrate | 0.4 to 2.0 percent; |

| | |
|---|---|
| sodium nitrite | 0 to 0.3 percent; |
| tolyltriazole | 0.05 to 0.4 percent; |
| sodium mercaptobenzothiazole | 0.05 to 1 percent; |
| borax | 0 to 2 percent. |

**Revendications**

1. Concentré antigel, inhibiteur de corrosion, d'un pH de 6 à 11, comprenant de l'eau, jusqu'à 200 parties par million d'halogénure de métal soluble dans l'eau, un alcool soluble dans l'eau, 0,4% à 2,0% en poids de nitrate soluble dans l'eau, et 0.1% à 2,0% en poids de phosphates solubles dans l'eau, molybdats solubles dans l'eau, triazoles solubles dans l'eau, thiazoles solubles dans l'eau, ou thiadazoles solubles dans l'eau, comme inhibiteur de corrosion des alliages de soudure et 0,1 à 1% en poids d'un inhibiteur général de corrosion consistant en les polymères d'esters silylalkyliques de phosphore et un silicate soluble dans l'eau, les pourcentages étant tous rapportés au poids total du dit concentré anti-gel.

2. Le concentré de la revendication 1, dans lequel l'alcool soluble dans l'eau est un polyalcool et l'inhibiteur de corrosion des alliages de soudure est un phosphate ou molybdate de métal alcalin, du mercaptobenzothiazole, dimercaptothiadiazole, phosphomolybdate ou silicomolybdate et leurs mélanges.

3. Le concentré de la revendication 1, dans lequel le pH est 7 à 10,5, l'alcool est éthylène glycol, propylène glycol ou diéthylène glycol et leurs mélanges, et l'halogénure soluble dans l'eau est un chlorure, bromure ou iodure de métal alcalin et leurs mélanges.

4. La composition de la revendication 1, dans laquelle le concentré anti-gel comprend, en pourcentage en poids,:

| | |
|---|---|
| éthylène glycol | 80 à 95%; |
| diéthylène glycol | 2 à 8%; |
| eau | 1 à 5%; |
| disilicate de sodium | 0.01 à 1.0%; |
| ester silylalkylique de phosphore | 0.01 à 1.0%; |
| diphosphate de sodium | 0.5 à 2.5%; |
| nitrate de sodium | 0.4 à 2.0%; |
| nitrite de sodium | 0 à 0.3%; |
| tolyltriazole | 0.05 à 0.4%; |
| mercaptobenzothiazole de sodium | 0.05 à 1%; |
| borax | 0 à 2%. |

**Patentansprüche**

1. Korrosionshemmendes Frostschutzmittel-Konzentrat mit einem pH-Wert von 6 bis 11, welches enthält: Wasser, bis 200 ppm wasserlösliches Metallhalogenid, einen wasserlöslichen Alkohol, 0,4 bis 2,0 Gewichtsprozent eines wasserlöslichen Nitrats, 0,1 bis 2,0 Gewichtsprozent wasserlösliche Phosphate, wasserlösliche Molybdate, wasserlösliche Triazole, wasserlösliche Thiazole oder wasserlösliche Thiadiazole als Korrosionsschutzmittel für Lotlegierungen, und 0,1 bis 1 Gewichtsprozent eines allgemeinen Korrosionsschutzmittels, bestehend aus den Polymerisaten von Silylalkylestern des Phosphors und einem wasserlöslichen Silikat, wobei sich alle Prozentangaben auf das Gesamtgewicht des Frostschutzmittel-Konzentrats beziehen.

2. Konzentrat gemäß Anspruch 1, dadurch gekennzeichnet, daß man als wasserlöslichen Alkohol einen mehrwertigen Alkohol und als Korrosionsschutzmittel für Lotlegierungen ein Alkalimetallphosphat oder -molybdat, Mercaptobenzothiazol, Dimercaptothiadiazol, Molybdatophosphat oder Silicomolybdat oder Mischungen dieser Verbindungen verwendet.

3. Konzentrat gemäß Anspruch 1, dadurch gekennzeichnet, daß man also Alkohol Ethylenglykol, Propylenglykol oder Diethylenglykol oder Mischungen dieser Verbindungen und als wasserlösliches Halogenid ein Alkalimetallchlorid, -bromid oder -jodid oder Mischungen dieser Verbindungen verwendet.

4. Mischung gemäß Anspruch 1, dadurch gekennzeichnet, daß das Frostschutzmittel-Konzentrat in Gewichtsprozent enthält:

| | |
|---|---|
| Ethylenglykol | 80 bis 95% |
| Diethylenglykol | 2 bis 8% |
| Wasser | 1 bis 5% |
| Dinatriumsilikat | 0,01 bis 1,0% |
| Silylalkylester des Phosphors | 0,01 bis 1,0% |
| Dinatriumphosphate | 0,5 bis 2,5% |
| Natriumnitrat | 0,4 bis 2,0% |
| Natriumnitrit | 0 bis 0,3% |
| Tolyltriazol | 0,05 bis 0,4% |
| Natriummercaptobenzothiazol | 0,05 bis 1% |
| Borax | 0 bis 2% |